# DEMANDE DE BREVET EUROPEEN

(11) **EP 0 640 463 A1**
(43) Date de publication de la demande: **01.03.1995**
(21) Numéro de dépôt: 93402126.2
(22) Date de dépôt: 31.08.1993
(51) Int. Cl.: B29C 53/08, B29C 53/82

(54) **Mandrin malléable pour conformer tubes et tuyaux flexibles**

(71) Demandeur: CAOUTCHOUC MANUFACTURE ET PLASTIQUES, F-78000 Versailles (FR)
(72) Inventeur: Tournery, Jacques, F-63910 Vertaizon (FR); Herbelin, Claude, F-63100 Clermont Ferrand (FR); Passelaigue, Jean-Paul, F-63260 Aigueperse (FR)
(74) Mandataire: Peuscet, Jacques

(57) **Abrégé**

Mandrin malléable pour conformer, par traitement thermique, tubes et tuyaux flexibles, caractérisé en ce qu'il est constitué d'une âme conformable (6) et d'un gainage polymérique (7), en ce qu'il est fabriqué et utilisé en grande longueur sous forme d'ébauche rectiligne (4), puis tronçonné, conformé et transporté en ensembles unitaires (8) avec l'ébauche de pièce en forme de coude (11) jusqu'au figeage de ses formes, plastiquement redressé par étirage entre longueurs de prise (9) et (10), le tube ou tuyau flexible conformé étant détringlé en longueurs sensiblement rectilignes (13), et le mandrin lui-même étant, en fin de cycle, décortiqué pour le recyclage de ses composants.

## Description

L'invention concerne le domaine de la fabrication des tubes et tuyaux en polymères thermoplastiques ou en élastomères, pour transfert de fluides comme les durits de radiateur ou les tuyaux d'alimentation en carburant sur les moteurs de véhicules automobiles ou les machines à poste fixe, qui sont mis en formes courbes ou complexes par confection sur un mandrin.

Elle utilise un outil servant de support, malléable et recyclable après la fabrication dudit tube ou tuyau flexible.

La fabrication de tuyaux coudés à base de caoutchouc dits durits de radiateur, ou plus généralement de tubes ou de tuyaux flexibles, fabriqués soit en composition élastomérique vulcanisable ou thermoplastique, soit en plastomères mis en forme grâce à leurs propriétés thermoplastiques, fait pratiquement toujours appel à un mandrin comme support interne.

La confection la plus manuelle fait usage de mandrins rigides imposant la forme intérieure, sur lesquels sont entringlées en force les longueurs nécessaires d'une ébauche tubulaire crue encore plastiquement déformable. Un traitement thermique fige les formes coudées plus ou moins complexes que la déformation élastique permet de rétablir après les efforts vigoureux du détringlage souvent pénible.

De nombreux perfectionnements sont apportés à cette méthode traditionnelle par la déformabilité du mandrin favorisant, à la fois, l'entringlage - qui peut alors être rectiligne - et le détringlage, où la déformabilité de la pièce finie et celle du mandrin qui lui sert de support peuvent être conjuguées.

Ainsi le document FR 2 126 533 de KLEBER-COLOMBES décrit-il un procédé de mise en forme de tuyaux flexibles, sur mandrin élastiquement déformable, par guidage dans une gouttière de maintien, le mandrin étant préférentiellement constitué d'un ressort hélicoïdal de section ronde ou à spires aplaties, revêtu ou non d'un élément cylindrique souple.

Le mandrin déformable peut encore être une corde ou une tresse métallique comme l'expose les documents US 2 908 940 et US 4 738 816 de GOODYEAR. L'inconvénient de ces procédés est qu'ils exigent un guidage au cours du traitement thermique, par un moyen extérieur à l'ébauche tubulaire, hors de son formage.

Le certificat d'addition FR 2 128 916 au premier document cité, décrit un dispositif qui permet de s'affranchir de ce guidage extérieur ; le mandrin élastiquement déformable lors de l'entringlage rectiligne est un ressort préformé, dont la position d'équilibre impose la forme courbe au cours de la vulcanisation de l'ébauche tubulaire. L'inconvénient de ce mandrin est qu'il est limité à la réalisation de formes simples et que son usage demeure très manuel, pour l'entringlage comme pour le détringlage.

Un procédé nettement plus mécanisable est indiqué dans le document EP 0 100 573 de VREDESTEIN, procédé dans lequel un support flexible est nécessaire pour porter l'ébauche, d'abord enfilée de façon rectiligne sur lui, puis guidée au cours du traitement thermique par un support conformé sur lequel est engagé, par glissement métal sur métal, avant et après ledit traitement thermique, le support flexible portant l'ébauche tubulaire. La désolidarisation du support flexible récupéré et de la pièce réalisée a lieu au moyen d'un nouveau support provisoire rectiligne qui les force élastiquement à un réalignement, pour permettre cette désolidarisation remplaçant le détringlage. Les opérations sont bien évidemment multipliées et, si l'automatisme en réduit le coût, la complexité du cycle rend difficile une bonne fiabilité, sans surveillance constante. Il est à noter que le support flexible qui se trouve conformé pendant chaque traitement thermique reste difficilement rectiligne et indifférent à une orientation spontanément indexée par rapport à la géométrie des coudes, ce qui limite sa durée de vie à quelques dizaines de cycles de réutilisation. L'invention propose un moyen permettant d'éviter totalement l'entringlage grâce à une fabrication d'ébauche en continu, suivie d'un façonnage et d'un figeage thermique des formes, avec dégagement en phase provisoire élastiquement rectiligne, du tube ou tuyau flexible conformé, dégagement réalisé par redressement d'un mandrin spécialement adapté à cet usage.

L'invention réside dans l'outillage, qui est un mandrin malléable destiné au conformage, par traitement thermique, de tubes ou de tuyaux flexibles.

L'invention est caractérisée en ce que ledit mandrin malléable est constitué d'une âme conformable, homogène ou composite, et d'un gainage polymérique, également homogène ou composite, qui constitue son enveloppe externe, en ce que ledit mandrin malléable est fabriqué et utilisé pour la confection d'une ébauche rectiligne, en grande longueur, par extrusion en extrudeuse à tête d'équerre, puis tronçonné, conformé par déformation plastique - les matériaux constitutifs dudit gainage polymérique et de ladite âme conformable étant choisis pour présenter des limites de courbure compatibles lors d'une déformation plastique -, et transporté, en ensembles unitaires, portant l'ébauche du tube ou tuyau flexible, jusqu'au figeage des formes de celui-ci et ensuite plastiquement redressé, par exemple par étirage entre longueurs de prise aux extrémités de chaque ensemble unitaire, le tube ou tuyau flexible conformé étant extrait du mandrin malléable, après découpe éventuelle, en longueurs sensiblement rectilignes, et en ce que, en fin de cycle, ledit mandrin malléable est décortiqué pour le recyclage de ses composants.

L'invention sera mieux comprise à la lecture de la description accompagnant les dessins dans lesquels :
- la figure 1 est une illustration de la fabrication à la fois du mandrin malléable servant d'outillage et de l'ébauche servant à la réalisation, en grande longueur, de tubes ou tuyaux flexibles coudés, par extrusion dans une extrudeuse à tête d'équerre ;
- la figure 2 représente trois vues d'un mandrin malléable unitaire portant son ébauche avant et après formage ;
- la figure 3 montre un exemple de pièces multiples réalisées simultanément, et constituant un ensemble unitaire, grâce au mandrin malléable, selon l'invention ;
- la figure 4 schématise une possibilité de récupération des matériaux recyclables composant le mandrin bimatière malléable ;
- la figure 5 est un schéma des phases successives de fabrication d'un tube ou tuyau flexible conformé utilisant le mandrin malléable, objet de l'invention.

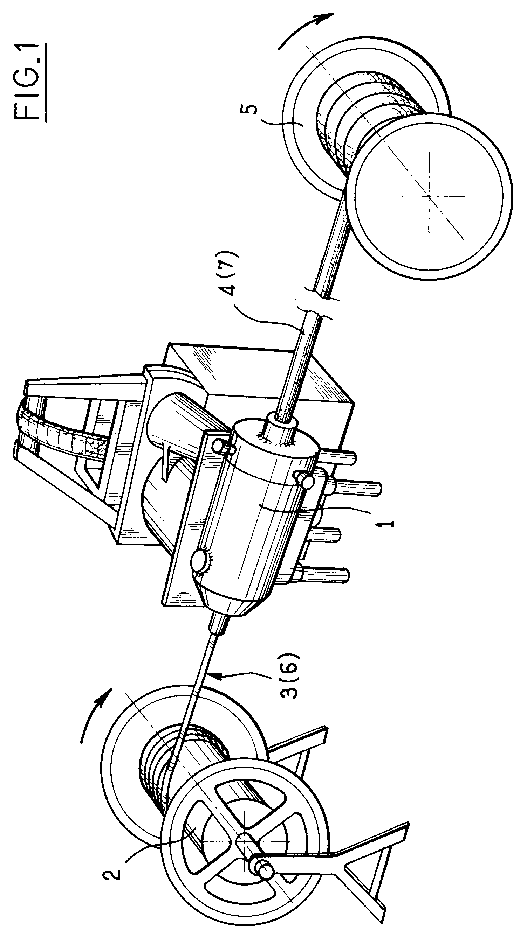

La figure 1 représente un stade intermédiaire de la fabrication en grande longueur, à la fois du mandrin malléable servant d'outillage et de l'ébauche servant à la réalisation de tubes ou tuyaux flexibles coudés.

Figurent, schématisés ici, à la fois une extrudeuse à tête d'équerre (1), et une bobine d'alimentation (2) qui approvisionne l'entrée dans celle-ci du produit de grande longueur (3) ; celui-ci, à sa sortie de ladite extrudeuse à tête d'équerre (1), devient l'ébauche rectiligne (4) qui se trouve ensuite enroulée sur la bobine de sortie (5) entrainée par un dispositif approprié.

Dans une première phase, qui est celle de la fabrication de l'outillage proprement dit, le produit de grande longueur (3) est constitué de l'âme conformable (6), en acier doux du commerce, par exemple, ou en tube métallique, approvisionnée sur la bobine d'alimentation (2).

Ladite âme conformable (6) se présente sous forme de fil, de corde ou de tube, dans des variétés très malléables, en acier doux ou en aluminium, par exemple, présentant les caractéristiques de résistance à la rupture et de limite élastique appropriées. L'âme conformable (6) peut également être constituée d'un jonc de matériau(x) polymérique(s) thermoplastique(s) ou d'un noyau en jonc ou tube métallique recouvert d'un matériau polymérique thermoplastique présentant des caractéristiques similaires.

Après l'entrée dans l'extrudeuse à tête d'équerre (1), ladite âme conformable (6) est revêtue, par extrusion, du gaînage polymérique (7), l'ensemble constituant l'ébauche rectiligne (4) du mandrin malléable au sortir de l'extrudeuse à tête d'équerre (1).

Le matériau dudit gainage polymérique (7) étant, le plus généralement, mais non obligatoirement thermoplastique au cours de cette extrusion à température contrôlée, se trouve figé, dès la sortie de l'extrudeuse à tête d'équerre (1).

L'ébauche rectiligne (4) constitue dès lors le mandrin malléable qui peut être stabilisé thermiquement puis enroulé, par une légère déformation plastique, sur la bobine de sortie (5).

A titre d'exemple non limitatif, le polymère constitutif du gainage polymérique (7), peut être du polypropylène ou l'un de ses copolymères tel celui commercialisé sous la marque HIFAX, un polyamide ou une polyoléfine ou un élastomère, présentant des caractéristiques de limite élastique similaires et l'absence d'adhésion, tant physico-chimique que mécanique, au matériau constitutif de la paroi interne du tube ou tuyau flexible, tout au long du processus de réalisation dudit tube ou tuyau flexible.

Le gainage polymérique (7) peut également, pour des raisons économiques par exemple, être constitué de deux matériaux polymériques, le plus généralement coaxiaux, présentant les caractéristiques de limite élastique appropriées et dont, seul, le matériau polymérique externe présente une absence de collage au matériau constitutif de la paroi interne du tube ou tuyau flexible.

Un exemple de dimensionnement pour constituer un mandrin malléable, de diamètre extérieur 9 millimètres, nécessite d'enrober, dans l'opération qui sert à sa fabrication, une âme conformable (6) constituée d'un fil en acier doux de 3 millimètres de diamètre par un gainage polymérique (7), coaxial, d'épaisseur constante. Préférentiellement, l'épaisseur du gainage polymérique (7) est sensiblement égale au diamètre de l'âme conformable (6).

L'opération d'enroulement sur la bobine de sortie (5) exerce, grâce à la malléabilité de l'ensemble, une légère déformation plastique, à la fois sur l'âme conformable (6) et sur le matériau constitutif du gaînage polymérique (7). Ce dernier, présentant une contraction thermique circonférentielle - de l'ordre de 1 % et préférentiellement 2 % - au cours du refroidissement, se trouve intimement appliqué, par serrage élastique radial, sur l'âme conformable (6), l'adhérence mécanique étant éventuellement accrue par un état de surface plus ou moins rugueux de ladite âme conformable (6).

La même représentation permet d'expliciter la phase de fabrication de l'ébauche du tube ou tuyau flexible, à partir d'un matériau extrudable, tel qu'une composition élastomérique vulcanisable ou thermoplastique ou encore d'un polymère thermoplastique, dans l'extrudeuse à tête d'équerre (1). La bobine d'alimentation (2) approvisionne alors, comme produit de grande longueur (3), le mandrin malléable précédemment constitué.

Au cours de la traversée de l'extrudeuse, ce dernier est alors revêtu du matériau extrudable pour constituer l'ébauche rectiligne (4) du tube ou tuyau flexible.

Celle-ci peut soit être immédiatement enroulée sur la bobine de sortie (5) pour traitements ultérieurs, soit, de manière préférentielle, recevoir les textiles de renforcement par traversée à titre d'exemple non limitatif d'une machine de guipage, tressage ou tricotage appropriée. Il est alors avantageux que l'éventuelle pose d'une couche élastomérique intermédiaire, d'autres couches de renforcement textile ou de films formant barrière d'étanchéité par exemple, et en dernier ressort, la pose du revêtement, suivent immédiatement, dans une chaîne de fabrication proprement dite de l'ébauche rectiligne du tube ou tuyau flexible avant qu'elle ne soit enroulée sur ladite bobine de sortie (5).

Des agents anticollants habituels, en poudre ou liquides, sont préférentiellement utilisés entre couches successives de l'ébauche du tube ou tuyau flexible, pour pouvoir manipuler ultérieurement l'ébauche rectiligne (4) dudit tube ou tuyau flexible en grande longueur, portée par le mandrin malléable qui subit une légère flexion plastique à chaque enroulement ou déroulement. A la suite de ces opérations, l'ensemble formé du mandrin malléable et de l'ébauche de tube ou tuyau flexible est tronçonné en longueurs unitaires constituant des ensembles unitaires (8).

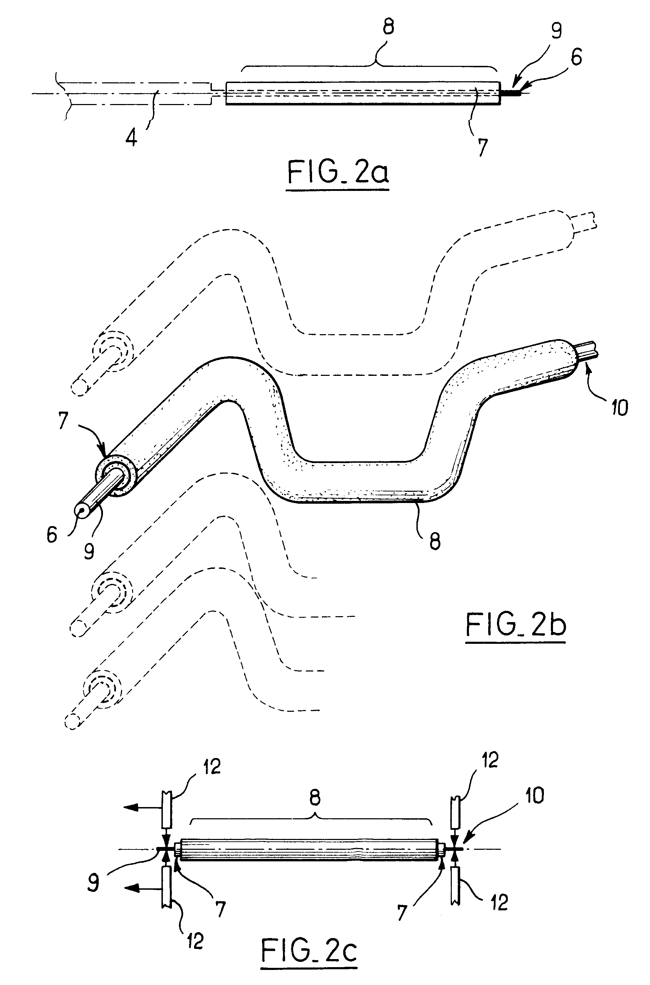

La figure 2 montre l'un de ces ensembles unitaires (8), lorsqu'une de ses extrémités (ou éventuellement les deux) a été dénudée sur quelques millimètres par une machine appropriée, afin que l'ensemble unitaire (8) puisse être saisi et manipulé sur une courte longueur de prise (9) formée sur l'âme conformable (6) débordant du matériau constitutif du gaînage polymérique (7). Ainsi est-il évité que le matériau extrudable qui le recouvre pour former l'ébauche rectiligne (4) du tube ou tuyau flexible ne soit saisi et blessé lors des manipulations.

La vue 2a représente la forme rectiligne de l'ensemble unitaire (8), après le tronçonnage et ledit dénudage d'extrémité ; la vue 2b montre un exemple de forme complexe que peut prendre ledit ensemble unitaire (8) après un formage, plus ou moins combiné, présentant des rayons éventuellement situés dans des plans différents, au moyen d'une cintreuse à commande numérique par exemple.

Pour cette opération, le matériau extrudable formant l'ébauche rectiligne (4) du tube ou tuyau flexible subit un éventuel traitement thermique (refroidissement ou chauffage) de façon à pouvoir supporter, sans écrasement local, les courbures nécessaires.

Dans l'état représenté par la vue 2b, l'ensemble unitaire (8) est alors manipulé et transporté, si nécessaire, vers les dispositifs de vulcanisation, autoclave ou étuve à air chaud, pour en figer les formes définitives qui ont été imposées au matériau extrudable de l'ébauche, pour réaliser le tube ou tuyau flexible conformé.

Disposés, par exemple, en grand nombre sur un plateau à trous sur lequel ils sont fixés par la courte longueur de prise (9), les ensembles unitaires (8) sont repris après refroidissement, pour la séparation du tube ou tuyau flexible conformé et du mandrin malléable.

Alors, grâce à l'absence d'adhérence entre ledit mandrin malléable et le matériau constitutif de la paroi interne du tube ou du tuyau flexible, la contraction thermique longitudinale dudit tube ou tuyau flexible conformé est très supérieure à celle du mandrin malléable.

Cette contraction longitudinale dégage de plusieurs millimètres le gaînage polymérique (7) sur les extrémités.

Un second dénudage permet, par des moyens analogues, de dégager une seconde longueur de prise (10) sur l'âme conformable (6). La vue 2c diffère de la vue 2a par l'existence de cette seconde longueur de prise (10) sur un ensemble unitaire (8). En effet, après le second dénudage, l'ensemble unitaire (8) conformé peut être saisi, dans des machoires formant pinces (12) par les deux extrémités de son âme conformable (6) dégagées du gainage polymérique (7) et formant la courte longueur de prise (9) et ladite seconde longueur de prise (10).

Un dispositif de type vérin exerce alors, sur les extrémités dudit ensemble unitaire (8), une traction destinée à remettre en position rectiligne l'âme conformable (6) et donc le gainage polymérique (7) qui la recouvre. Ces matériaux étant malléables, et ce mouvement exerçant une déformation plastique des composants du mandrin malléable, l'allongement peut dépasser de quelques pourcents la longueur initiale dudit mandrin malléable, sans inconvénient, ceci aidant à la séparation entre le mandrin malléable et le tube ou tuyau flexible conformé et alors élastiquement redressé dans cette opération.

En effet, le matériau extrudable constitutif du tube ou tuyau flexible conformé, étant à présent figé dans les courbes imposées lors du traitement thermique, accepte, par simple élasticité, la forme quasi-rectiligne que lui impose le mandrin malléable.

Après extraction du mandrin malléable, le tube ou tuyau flexible conformé retrouve, au repos, les formes qui lui ont été imposées par le procédé de figeage.

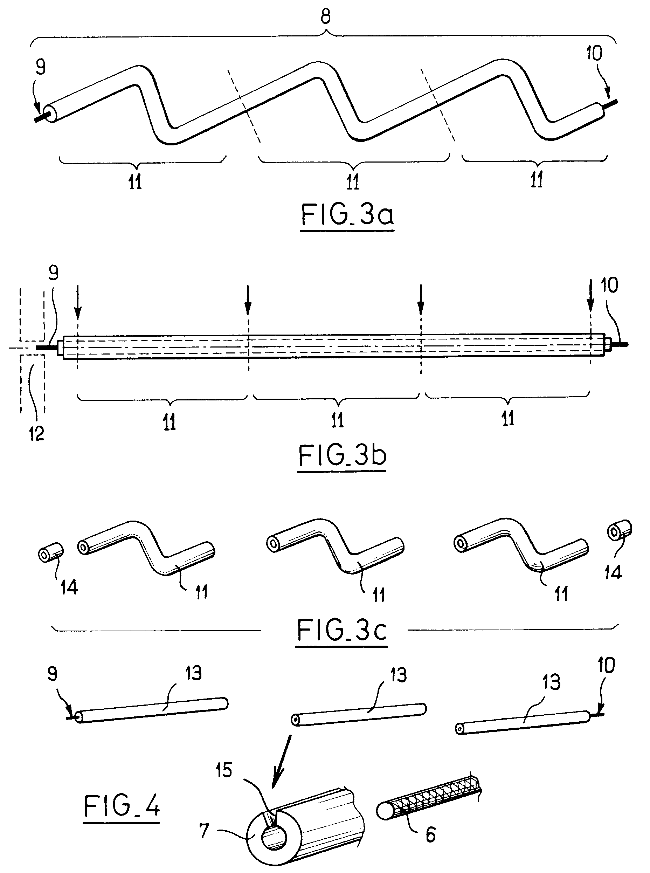

La figure 3 représente, en variante, une possibilité d'amélioration de la productivité apportée par l'usage du mandrin malléable selon l'invention.

L'ensemble unitaire (8) conformé peut, en effet, être l'ébauche commune à plusieurs pièces en forme de coude (11) successives. Après sa conformation, l'ensemble unitaire (8) devient un chapelet desdites pièces en forme de coude (11), toutes semblables comme représenté par la vue 3a. Dans une variante non représentée, le chapelet peut être constitué d'une succession de pièces en forme de coude (11) de formes et de dimensions différentes les unes des autres.

L'opération de redressement du mandrin malléable, - par étirage de l'ensemble unitaire (8) conformé, - entre ses deux longueurs de prise (9) et (10), redresse élastiquement ledit chapelet de pièces en forme de coude (11).

Cette opération simplifie le repérage linéaire des coupes à effectuer sur l'ensemble unitaire (8), pour séparer les pièces en forme de coude (11), encore portées le mandrin malléable, rectiligne, comme représenté en vue 3b.

La séparation du mandrin malléable rectiligne et des tubes ou tuyaux flexibles conformés est réalisée et chaque pièce en forme de coude (11) reprend ses formes définitives après avoir été libérée de la forme temporairement rectiligne comme le montre la vue 3c.

L'avantage du tronçonnage indexé en longueurs rectilignes est de permettre une coupe franche sur la pièce en forme de coude (11), encore portée par le mandrin malléable, et d'autoriser diverses finitions à ce stade, y compris un éventuel surmoulage sur au moins une extrémité du tube ou tuyau flexible formant ladite pièce en forme de coude (11). Le maintien provisoire en forme rectiligne autorise, en effet, l'introduction du tube ou tuyau flexible conformé dans un moule simple et permet de réaliser le surmoulage de l'embout au voisinage d'un coude, pour former des dérivations, placer une purge ou une sonde de température, par exemple.

La chute de courte longueur (14), usuellement nécessaire pour rafraichir la coupe de l'ébauche, déformée sur une extrémité libre lors du traitement thermique, n'est plus nécessaire qu'aux extrémités du chapelet de pièces en forme de coude (11), apportant de ce fait, un avantage économique certain.

La figure 4 est un schéma indiquant les phases de récupération des composants recyclables du mandrin malléable.

Les longueurs sensiblement rectilignes (13), du mandrin malléable, après détringlage des tubes ou tuyaux flexibles conformés, sont constituées de l'âme conformable (6) et du gainage polymérique (7), élastiquement serré axialement par contraction thermique sur ladite âme conformable (6), en éléments de courtes longueurs.

Par exemple, dans la variante décrite par la figure 3, les longueurs sensiblement rectilignes (13) peuvent être de géométries différentes, l'une portant une des longueurs de prise (9) ou (10), l'autre résultant seulement de tronçonnages intermédiaires. A plus forte raison, lorsque sont regroupées les diverses longueurs sensiblement rectilignes (13) provenant de fabrications différentes, toutes celles de mêmes diamètres peuvent entrer dans une décortiqueuse qui tranche au moins un sillon rectiligne longitudinal (15) au long du gainage polymérique (7) en état de serrage sur l'âme conformable (6). La profondeur de chacun des sillons rectilignes longitudinaux (15) est telle qu'elle permet de libérer les contraintes radiales qui s'exerçaient sur le gainage polymérique (7) qui s'ouvre, alors, spontanément pour permettre un dégagement aisé de l'âme conformable (6).

Le polymère constitutif du gainage polymérique (7), qui, à titre d'exemple non limitatif, peut être un polypropylène ou l'un de ses copolymères, une polyoléfine ou un polyamide, est alors broyé de façon à reconstituer les granulés recyclables qui sont réutilisables en alimentation de la trémie de l'extrudeuse pour la fabrication du mandrin malléable, soit directement, soit après traitement éventuel.

L'âme conformable (6), lorsqu'elle est métallique, est récupérable, en bottes de longueurs de fil analogues, chez le métallurgiste qui les refond pour tréfiler le fil ou la corde.

Lorsque l'âme conformable (6) est constituée d'un jonc polymérique thermoplastique, son recyclage est encore plus aisé, par simple broyage du matériau suivi d'une nouvelle extrusion sous forme de jonc.

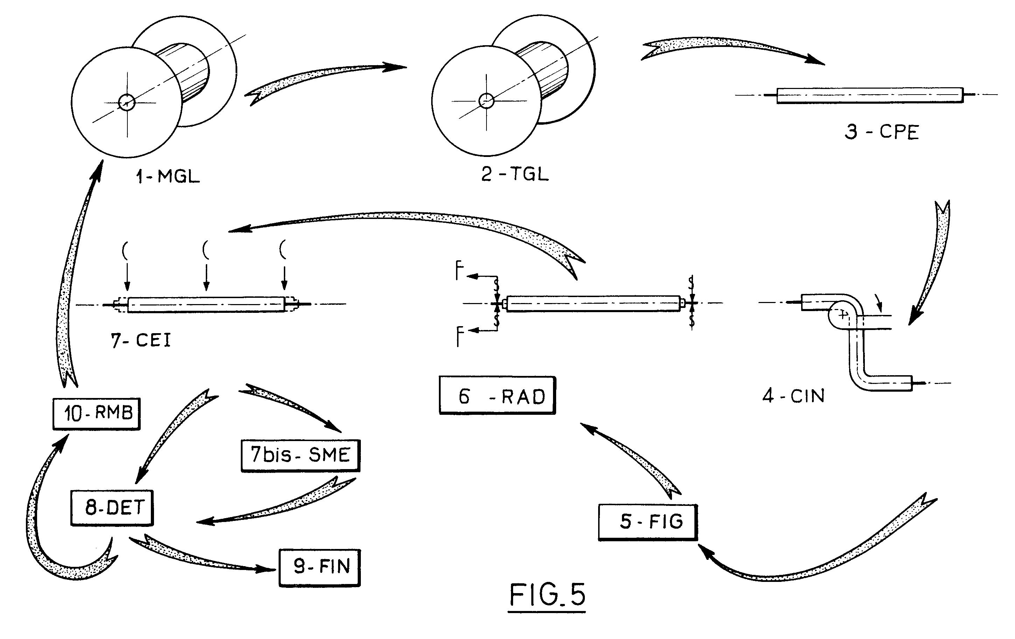

La figure 5 est un schéma récapitulatif des phases successives de la fabrication du mandrin malléable comme de celle des tubes ou tuyaux flexibles conformés.

La phase (1-MGL), symbolise, par une bobine, la fabrication du mandrin malléable, en grande longueur rectiligne, dont les composants sont l'âme conformable et le gainage polymérique.

Pour réaliser ledit mandrin malléable, l'âme conformable est approvisionnée sous forme de bobines puis déroulée et plastiquement redressée à l'entrée d'une extrudeuse à tête d'équerre, dans la traversée de laquelle elle est revêtue du gainage polymérique, en une phase ou plus selon que ledit gainage polymérique est homogène ou composite.

Cette opération achevée, le mandrin malléable est soit enroulé sur la bobine de sortie, en vue de manipulations et traitements ultérieurs, soit directement conduit vers une autre extrudeuse en vue de l'étape suivante.

La phase (2-TGL) symbolise, par une bobine également, la fabrication du tube ou tuyau flexible, en grande longueur rectiligne dans cette étape, et porté par le mandrin malléable.

Ledit mandrin bimatière malléable constitue le produit de grande longueur - approvisionné sur bobine ou venant directement de l'étape (1-MGL) sans bobinage intermédiaire - sur lequel une autre extrudeuse à tête d'équerre dépose le (ou les) composant(s) polymérique(s) d'un tube ou tuyau flexible.

Des phases intermédiaires comportent, à titre d'exemple non limitatif, le tressage, guipage ou tricotage du renforcement textile avec pose éventuelle de couches intermédiaires de compositions élastomériques ou de matériaux thermoplastiques, l'ensemble de ces opérations constituant la paroi dudit tuyau flexible.

Comme précédemment pour la réalisation du mandrin malléable seul, le tube ou tuyau flexible de grande longueur porté par le mandrin malléable - l'ensemble constituant le produit de grande longueur - peut être enroulé sur une bobine ou venir alimenter directement l'étape suivante.

La phase (3-CPE), symbolisée par un ensemble unitaire, est l'étape de coupe à longueur et de préparation de l'une au moins des extrémités. Après éventuelle remise en condition rectiligne s'il a été enroulé sur bobine à l'issue de la phase précédente, le produit de grande longueur est tronçonné en ensembles unitaires dont une extrémité libre au moins sera dénudée par une machine appropriée pouvant, avantageusement, être automatisée. Le but de cette opération est de permettre la manipulation des ensembles unitaires, par saisie entre des machoires formant pinces, d'une courte longueur de prise sur chaque ensemble unitaire, au cours des opérations ultérieures.

La phase (4-CIN) évoque, par une silhouette, les opérations de formage des ensembles unitaires, cette opération pouvant, éventuellement, être combinée, sur une même machine, avec celle du tronçonnage du produit de grande longueur en ensembles unitaires. L'opération de formage permet d'atteindre les formes recherchées pour les tubes ou tuyaux flexibles conformés. Les coudes sont, éventuellement, réalisés à un angle un peu plus élevé que nécessaire sur le produit fini pour tenir compte d'un léger retour élastique des tubes ou tuyaux flexibles conformés, après l'opération d'extraction du mandrin malléable.

La phase (5-FIG) est celle du figeage des formes du tube ou tuyau flexible conformé, réalisé par l'opération de vulcanisation si la partie polymérique de la paroi est constituée de composition(s) élastomérique(s), par réticulation ou simple refroidissement lorsque la partie polymérique de la paroi est constituée de polymère(s) ou d'élastomère(s) thermoplastique(s).

La phase (6-RAD) est caractéristique de l'utilisation du mandrin malléable, objet de l'invention. Elle consiste en l'opération de remise au droit ou remise en condition rectiligne de chacun des ensembles unitaires, encore constitués du mandrin malléable et du tube ou tuyau flexible conformé qu'il porte. Cette opération de remise en condition rectiligne est réalisée par la saisie de chaque ensemble unitaire, dans les zones de longueurs de prise entre deux jeux de machoires formant pinces associées à un dispositif de traction, de type vérin.

La phase (7-CEI) consiste en une nouvelle coupe, en éléments individuels, tronçonnage nécessaire dans la variante où le mandrin malléable porte un chapelet de plusieurs pièces en forme de coude, de formes identiques ou différentes, et qui est réalisé après redressement élastique de l'ensemble commun.

Chacun des ensembles intermédiaires peut éventuellement subir, alors, un dénudage d'extrémité, comme l'ensemble unitaire qui leur a donné naissance, pour permettre les manipulations ultérieures.

La phase (7 bis-SME) de surmoulage d'une extrémité peut être réalisée par exemple pour constituer des dérivations, poser des purges ou des sondes.

La phase (8-DET), d'extraction du mandrin malléable, permet la séparation du tube ou tuyau flexible conformé et du mandrin bimatière malléable.

Ladite extraction du mandrin malléable est assurée par traction sur l'âme conformable par l'une des longueurs de prise, le tube ou tuyau flexible conformé se trouvant provisoirement redressé dans cette opération.

C'est grâce à l'effet mémoire des polymères constitutifs que, libéré de toute contrainte, le tube ou tuyau flexible conformé retrouve les formes qui lui ont été imposées au cours du formage, les opérations de remise en condition rectiligne se produisant toujours dans la zone de déformation élastique, réversible.

A la fin de cette étape, le tube ou tuyau flexible conformé peut encore subir une phase (9-FIN) de finition, éventuellement nécessaire après l'extraction du mandrin malléable.

Le tube ou tuyau flexible conformé est alors prêt, après conditionnement, à être livré à l'utilisateur.

Le mandrin malléable, lui, va subir la phase (10-RMB) de recyclage de ses composants. Pour ce faire, il est nécessaire de séparer l'âme conformable du gainage polymérique qui l'enserre par l'effort axial dû à la contraction thermique.

Au moins un sillon rectiligne longitudinal est alors pratiqué dans toute l'épaisseur du gainage polymérique qui se trouve, ainsi, libéré de toute contrainte et tend à s'ouvrir le long d'une génératrice pour libérer l'âme conformable.

Le gainage polymérique est alors broyé en granulés réutilisables, directement ou après traitement, pour une nouvelle alimentation de la boudineuse.

Les longueurs d'âme conformable, lorsqu'elles sont métalliques, sont réunies en bottes et refondues puis tréfilées pour former de nouvelles âmes métalliques de grande longueur. Lorsqu'elles sont plastiques, elles sont broyées et extrudées en nouveaux joncs.

Les avantages du mandrin malléable utilisé dans les étapes précédemment indiquées pour la fabrication de tubes ou tuyaux flexibles conformés résident dans les points suivants :
- la malléabilité du mandrin est utilisée dans les différentes phases du processus de réalisation des tubes ou tuyaux flexibles qu'il porte ;
- la réalisation du mandrin malléable, comme de l'ébauche qu'il porte, en grande longueur, permet d'éviter les pertes d'éléments discontinus au démarrage et en fin de fabrication, la manutention étant continue ou permettant un approvisionnement sous forme de bobines qui peuvent contenir des centaines et même des milliers de mètres d'ébauches du produit de grande longueur ;
- le formage des ensembles unitaires est facilement automatisable et la définition géométrique peut être aisément modifiée, en cours de fabrication, sur la même ébauche rectiligne commune à plusieurs types de pièces, allant même jusqu'à la possibilité de réaliser sans difficulté un surmoulage d'extrémité à proximité immédiate d'un coude, cette opération se pratiquant lorsque le tuyau flexible conformé est remis en condition rectiligne ;
- le redressage par étirement peut être commun à plusieurs fabrications de formes différentes apportant, de ce fait, un gain de productivité et un avantage économique.
- la réalisation de tubes et de tuyaux flexibles conformés de faible diamètre et de grande longueur, qui, avec les techniques connues, n'étaient pas entringables, devient possible ;
- les opérations pénibles d'entringlage et de détringlage peuvent être évitées en raison des possibilités d'automatisation du procédé ;
- la pollution de l'atelier est réduite, la fonction des agents anti-collants (type silicones), utilisés dans l'art antérieur pour éviter le collage sur le mandrin, étant remplie par le matériau constitutif du gainage polymérique lui-même, ce qui constitue également un avantage économique ;
- la séparation des matières polymériques ou métallique après usage du mandrin malléable permet un recyclage total, autorisant l'usage de matériaux coûteux qui sont utilisés de nombreuses fois avec faible incidence économique sur la fabrication des tubes et tuyaux flexibles conformés ;
- la perte de matière aux extrémités de longueurs unitaires des tubes ou tuyaux flexibles conformés est nettement réduite par rapport aux procédés usuels.

L'homme de l'art-peut, bien évidemment, combiner en nombre, en géométrie et en nature, des matériaux ayant des propriétés similaires pour réaliser un mandrin malléable et/ou combiner les différentes opérations du procédé de réalisation des tubes ou tuyaux flexibles conformés sans sortir du cadre de l'invention.

## Revendications

1. Mandrin malléable destiné au conformage, par traitement thermique, de tubes ou de tuyaux flexibles caractérisé en ce qu'il est constitué d'une âme conformable (6), homogène ou composite, et d'un gainage polymérique (7), également homogène ou composite, qui constitue son enveloppe externe, en ce que ledit mandrin malléable est fabriqué et utilisé pour la confection d'ébauche rectiligne (4), en grande longueur, par extrusion en extrudeuse à tête d'équerre (1), puis tronçonné, conformé par déformation plastique - les matériaux constitutifs du gainage polymérique (7) et de l'âme conformable (6) étant choisis pour présenter des limites de courbure compatibles lors d'une déformation plastique - et transporté, en ensembles unitaires (8) portant l'ébauche du tube ou tuyau flexible, jusqu'au figeage des formes de celui-ci, et ensuite plastiquement redressé par étirage entre longueurs de prise (9) et (10) aux extrémités de chaque ensemble unitaire (8), le tube ou tuyau flexible conformé étant extrait du mandrin malléable, après découpe éventuelle, en longueurs sensiblement rectilignes (13), et en ce que, en fin de cycle, ledit mandrin malléable est décortiqué pour le recyclage de ses composants.

2. Mandrin malléable selon la revendication 1, caractérisé en ce que le (ou les) matériau(x) constitutif(s) du gainage polymérique (7) présente(nt) un coefficient de contraction linéaire au cours du refroidissement suffisant pour enserrer, par un effort radial, l'âme conformable (6), ce qui permet, par réalisation d'au moins un sillon rectiligne longitudinal (15), faisant cesser la contrainte, la séparation ultérieure des composants du mandrin malléable en vue de leur recyclage.

3. Mandrin malléable selon l'une des revendications 1 ou 2, caractérisé en ce que le gainage polymérique (7) est homogène et constitué d'un polymère thermoplastique tel qu'un polyamide ou une polyoléfine homo ou copolymère, ou d'un élastomère, présentant, vis à vis de la paroi interne du tube ou tuyau flexible une absence d'adhésion, tant physico-chimique que mécanique, tout au long du processus de réalisation dudit tube ou tuyau flexible.

4. Mandrin malléable selon l'une des revendications 1 ou 2, caractérisé en ce que le gainage polymérique (7) est composite et que seul le composant constitutif de sa couche la plus externe présente, vis à vis de la paroi interne du tube ou tuyau flexible, une absence d'adhésion, tant physico-chimique que mécanique, tout au long du 15 processus de réalisation dudit tube ou tuyau flexible.

5. Mandrin malléable selon la revendication 1, caractérisé en ce que l'âme conformable (6) est homogène et réalisée en jonc(s) ou fil(s) métallique(s), tel que l'acier doux, par exemple.

6. Mandrin malléable selon la revendication 1, caractérisé en ce que l'âme conformable (6) est homogène et constituée d'un tube en métal malléable tel que l'acier doux ou l'aluminium, par exemple.

7. Mandrin malléable selon la revendication 1, caractérisé en ce que l'âme conformable (6) est un jonc de polymère(s) thermoplastique(s).

8. Mandrin malléable selon la revendication 1, caractérisé en ce que l'âme conformable (6) est composite et constituée d'un noyau en jonc, fil ou tube métallique malléable recouvert d'un matériau thermoplastique.
